(19) Europäisches Patentamt
European Patent Office
Office européen des brevets

(11) EP 4 008 687 A1

(12) EUROPEAN PATENT APPLICATION

(43) Date of publication:
**08.06.2022 Bulletin 2022/23**

(21) Application number: **20383049.2**

(22) Date of filing: **02.12.2020**

(51) International Patent Classification (IPC):
***C01G 45/02*** (2006.01) ***C01G 49/06*** (2006.01)
***C01G 51/04*** (2006.01) ***C01G 53/04*** (2006.01)
***H01M 4/48*** (2010.01) ***H01M 4/505*** (2010.01)
***H01M 4/52*** (2010.01) ***H01M 4/90*** (2006.01)
***H01M 10/052*** (2010.01) ***H01M 10/054*** (2010.01)
***H01M 12/08*** (2006.01)

(52) Cooperative Patent Classification (CPC):
**C01G 49/06; C01G 45/02; C01G 51/04; C01G 53/04; H01M 4/483; H01M 4/502; H01M 4/523; H01M 4/9016; H01M 10/052; H01M 10/054; H01M 12/08;** C01P 2002/72; C01P 2002/88; C01P 2004/03; C01P 2004/04;
(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Fundación Imdea Materiales**
**28906 Getafe (Madrid) (ES)**

(72) Inventors:
- **VINCENT, Mewin**
  **E-28901 Getafe, Madrid (ES)**
- **ETACHERI, Vinodkumar**
  **E-28901 Getafe, Madrid (ES)**

(74) Representative: **ABG Intellectual Property Law, S.L.**
**Avenida de Burgos, 16D**
**Edificio Euromor**
**28036 Madrid (ES)**

# (54) A METHOD FOR THE LARGE SCALE SYNTHESIS OF METAL OXIDE NANOSHEETS, AND THEIR USES

(57) The present invention relates to a rapid, scalable and inexpensive method for the synthesis of metal oxide nanosheets; the uses of the metal oxide nanosheets as electrode active materials and as catalyst; an electrode comprising the metal oxide nanosheets, a process for producing the electrode, a cell comprising the electrode and an energy storage and/or delivery system.

EP 4 008 687 A1

(52) Cooperative Patent Classification (CPC): (Cont.)
C01P 2004/24; C01P 2004/54; C01P 2004/64;
C01P 2006/12; C01P 2006/14; C01P 2006/16;
C01P 2006/40; H01M 4/0404; H01M 4/661

## Description

## FIELD OF THE ART

The present invention relates to the field of the large-scale production of metal oxide nanosheets, and more particularly to those used in the production of electrodes for batteries.

## STATE OF THE ART

Nanosheets exhibits large lateral dimensions compared to their thickness (usually their thickness is between 1 and 100 nm). Owing to their 2D nature, nanosheets have high specific surface areas compared to their corresponding 3D homologous and may show unique physical, electronic, chemical and optical phenomena due to quantum confinement of the surface exposed atoms in one principal direction. These special features imply that nanosheets have different properties than their analogous bulk materials. However, the conditions used in the synthesis of nanosheets are critical to properly tune their properties such as dimensions, crystallinity, crystallite size and the above-mentioned functionalities.

Current syntheses of metal oxide (MO) nanosheets are tedious and, unfortunately, large-scale production of MO nanosheets is still restricted to the available strategies such as exfoliation, hydrothermal synthesis, salt-templated growth, graphene assisted synthesis, liquid metal template synthesis or electrophoretic techniques.

Production methods dependent on templates, normally involve the use of expensive template materials such as inverse lamellar micelles, metal oxide frameworks (MOF), graphene oxide, G-Si2, etc. as templates, coating them with a precursor and thermally decompose them to achieve the final product. However, in most cases, pre or posttreatment steps are required (for example to remove the GO template) thus, making the process long, complicated and more energy consuming. Consequently, these synthetic methods are not suitable for large scale industrial production of metal oxide nanosheets. For example, CN108355632 discloses the production of metal oxide nanosheets for catalytic purposes, synthesized by hydrothermal precipitation of a solution containing the metal of interest and using graphene oxide as a template, followed by a calcination step under air at temperatures of up to 850 °C.

CN108435157A describes a method of making metal oxide nanosheet from metal salts using pulverized straw core as mechanical template. This method comprises several mixing, washing and filtration steps and multiple high temperatures (600 -1000 °C) steps requiring long time to complete.

Therefore, the methodologies disclosed in the prior art imply several steps and high production costs due to the use of expensive starting materials and high amounts of energy.

From all the above new strategies are necessary to decrease costs and simplify the fabrication of metal oxide nanosheets with improved properties.

## BRIEF DESCRIPTION OF THE INVENTION

The present invention describes a simplified, efficient and cost-effective solid-state method for the synthesis of metal oxide (MO) nanosheets on large scale, using molecular reactors instead of mechanical templates such as graphene oxide. In particular, the method of the invention disclosed herein involves the use of starch as molecular reactor, as opposed to the physical templates previously used, avoiding the use of graphene oxide or other similarly expensive polymers. Replacing GO templates with inexpensive molecular reactors described herein reduces the number of synthetic steps, as well as dramatically drop production costs. Noteworthy, the price of starch is around $0.15 USD per kilogram (105 times cheaper than commercial GO). Thus, metal oxide nanosheets are produced from metal nitrates and starch molecular reactors (in powder form) which allows obtaining the desired products in big batches (on the kilogram scale).

The authors of the present invention have observed that the synthesized metal oxide nanosheets of the present invention have a hierarchical microstructure, wherein each metal oxide nanosheet comprises nanograins, which results in the formation of numerous grain boundaries. The authors of the present invention have also observed that the metal oxide nanosheets of the present invention are also highly porous. Then, when the metal oxide nanosheets of the present invention are part of an electrode, they lead to improved contact with the electrolyte solution. In addition, when said electrode is part of a cell, the authors have observed that, the grain boundaries of the metal oxide nanosheets can act as additional sites for surface ion storage, such as Li-ion storage, and also facilitate ultrafast ion diffusion, for example Li/ Na-ion diffusion. Then, the authors have observed that the structural features of the metal oxide nanosheets of the present invention can effectively induce pseudocapacitive ion storage in the metal oxide nanosheets, for example, when being part of an electrode. In addition, it has been observed that under electrochemical ion insertions, the lateral dimension and porosity of the metal oxide nanosheets of the invention allow them to buffer the volume change and hence maintain their structural integrity.

Then, an electrode or a cell comprising the metal oxide nanosheets of the invention have a high specific capacity

and rate performance resulting from the pseudocapacitive type of ion storage (such as Li/Na ion storage) of the metal oxide nanosheets.

In a first aspect, the present invention is directed to a process for producing metal oxide nanosheets comprising the steps of:

a) providing a mixture comprising a metal nitrate and starch, and

b) heating the mixture obtained in step (a) at a temperature of at least 300 °C until thermal decomposition of said mixture.

A second aspect of the present invention is directed to the metal oxide nanosheets obtainable by the process of the invention;

- wherein the metal oxide nanosheets are porous.

A third aspect of the present invention refers to the use of the metal oxide nanosheets of the invention as electrode active materials.

Another aspect of the present invention is directed to the use of the metal oxide nanosheets of the present invention in any of its particular embodiments, as catalyst; preferably as oxygen catalyst.

In another aspect, the present invention is directed to an electrode comprising:

- the metal oxide nanosheets of the invention;
- optionally an electrically conductive additive,
- optionally a binder; and
- a conductive material;

wherein the metal oxide nanosheets of the invention, optionally an electrically conductive additive, and optionally a binder, are coating the conductive material; preferably wherein the conductive material is a metal foil or a metal mesh.

In yet another aspect, the invention disclosed herein is directed to a process for producing the electrode of the invention, comprising the following steps:

a) providing the metal oxide nanosheets of the invention in any of their particular embodiments, wherein the metal oxide nanosheets are optionally in admixture with an electrically conductive additive and/or a binder; and
b) coating a conductive material with the metal oxide nanosheets or with the mixture of step (a).

In another aspect, the invention disclosed herein is directed to a cell comprising:

(a) a positive electrode and a negative electrode; wherein one electrode is an electrode of the invention; and optionally, the other electrode is a metal electrode; and
(b) an electrolyte comprising active species.

Another aspect of the invention is directed to an energy storage and/or delivery system comprising at least one cell according to the invention.

## FIGURES

The accompanying figures illustrate exemplary embodiments of the invention and, together with the written description serve to explain the principles of the invention.

FIG. 1 shows a schematic representation of starch.
FIG. 2 illustrates the hydrogen bonds created by mechanical means between the hydrogen of the hydroxyl groups from starch and the negatively charged oxygen atoms in nitrate anions.
FIG. 3 shows the thermogravimetric analysis of (a) (i) starch, (ii) nickel nitrate and (iii) nickel nitrate and starch; (b) (i) starch, (ii) iron nitrate and (iii) iron nitrate and starch; (c) (i) starch, (ii) manganese nitrate and (iii) manganese nitrate and starch; and (c) (i) starch, (ii) cobalt nitrate and (iii) cobalt nitrate and starch.
FIG. 4 shows the X-ray diffraction analysis of $Co_3O_4$, $Mn_2O_3$, NiO and $Fe_2O_3$ nanosheets.
FIG. 5 depicts (a), (b) SEM and (c), (d) TEM micrographs of $Co_3O_4$ nanosheets.
FIG. 6 depicts (a), (b) SEM and (c), (d) TEM micrographs of NiO nanosheets.

FIG. 7 depicts SEM and TEM micrographs of $Mn_2O_3$ nanosheets.
FIG. 8 depicts SEM and TEM micrographs of $Fe_2O_3$ nanosheets.
FIG. 9 depicts (a) Li-ion and (b) Na-ion storage performance of metal oxide nanosheets.
FIG. 10 shows the electrochemical performance of MO nanosheets ($Co_3O_4$, NiO and $Mn_3O_4$) as active material in a Li-$O_2$ battery cathode when (a) the anode comprises 0.2M LiTFSI + 0.8 M LiNO3 in TEGDME; (b) the anode comprises 1M LiTFSI in TEGDME; Figure (c) shows the compared discharge capacity between the two anodes (a) and (b).
FIG. 11 depicts the pseudocapacitive contribution for (a) Li-ion and (b) Na-ion batteries.

## DETAILED DESCRIPTION OF THE INVENTION

As mentioned before, the present invention is directed to a process for producing metal oxide nanosheets comprising the steps of:

a) providing a mixture comprising a metal nitrate and starch, and

b) heating the mixture obtained in step (a) at a temperature of at least 300°C until thermal decomposition of said mixture.

In the context of the present invention, the term "nanosheet" refers to a material characterized by sheet structure with larger lateral dimensions than thickness; preferably wherein the lateral dimensions are at least 2 times larger than the thickness of the nanosheets; preferably at least 3 times; more preferably at least 5 times; even more preferably at least 10 times; even more preferably between 2 and 50 times.

In a particular embodiment the metal oxide nanosheets of the present invention have a lateral dimension of at least 70 nm; preferably of between 80 and 1000 nm; more preferably of between 90 and 700 nm; even more preferably of between 100 and 500 nm.

In a particular embodiment the metal oxide nanosheets of the present invention have a thickness of below 70 nm; more preferably of below 60 nm; even more preferably of below 50 nm; even much more preferably below 40.

In a particular embodiment the metal oxide nanosheets of the present invention have a thickness of between 0.1 and 70 nm; even more preferably of between 1 and 60 nm; even much more preferably of between 5 and 55 nm; preferably of between 10 and 50 nm; more preferably of between 20 and 40 nm.

In a particular embodiment, the metal oxide nanosheets of the invention are layered; preferably they comprise at least two layers.

The term "metal nitrate" refers to a salt comprising a metallic cation and a nitrate anion. The nitrate anion refers to a polyatomic anion of molecular formula $NO_3^-$, wherein the nitrogen is the central atom surrounded by three oxygen atoms in a trigonal planar arrangement, and a formal charge of -1.

In a particular embodiment, the metal nitrate of step (a) is a transition metal nitrate, an alkaline metal nitrate, an alkaline earth metal nitrate or a mixture thereof; preferably a transition metal nitrate. In an embodiment, the metal nitrate comprises a metallic cation; wherein said metallic cation is selected from a transition metal cation, such as $Mn^{2+}$, $Fe^{3+}$, $Co^{2+}$, $Ni^{2+}$, $Cr^{3+}$, $Sc^{3+}$, $V^+$, $Zr^{4+}$, $Pd^{2+}$, $Ti^{4+}$ or $Cu^{2+}$;a post transition metal cation such as $Bi^{3+}$,$Zn^{2+}$, $Cd^{2+}$, $In^{3+}$, $Sn^{4+}$, $Pb^{2+}$, $Tl^{3+}$ or $Al^{3+}$ or an alkaline or alkaline earth metal cation such as $Sr^{2+}$,$K^+$, $Na^+$, $Mg^{2+}$ or $Ca^{2+}$, $Ba^{2+}$; preferably a transition metal cation such as $Mn^{2+}$, $Fe^{3+}$, $Co^{2+}$, $Ni^{2+}$.

Accordingly, in a preferred embodiment, the metal nitrate is selected from manganese (II) nitrate, iron (III) nitrate, cobalt (II) nitrate, nickel (II) nitrate, chromium(III) nitrate, Scandium (III) nitrate, Vanadium (I) nitrate, Zirconium (IV) nitrate, Palladium (II) nitrate, Titanium (IV) nitrate, Copper (II) nitrate, Strontium (II) nitrate, Potassium (I) nitrate, Sodium (I) nitrate, Magnesium (II) nitrate, Calcium (II) nitrate, Barium (II) nitrate, Bismuth (III) nitrate, Zinc (II) nitrate, Cadmium (II) nitrate, Indium (III) nitrate, Tin (IV) nitrate, Lead (II) nitrate, Thalium (III) nitrate, Aluminium (III) nitrate and mixtures thereof; preferably manganese (II) nitrate, iron (III) nitrate, cobalt (II) nitrate, nickel (II) nitrate and mixtures thereof.

In a particular embodiment, the metal nitrate used in the mixture of the first step of the process of the invention is in a hydrated form. By the term "hydrated form" regarding the metal nitrate of the invention, it should be understood a metal nitrate containing water molecules combined in a particular ratio; these water molecules can be either bound to the metal center or crystallized with the metal complex. Said hydrated compounds are generally noted as salt·$nH_2O$, wherein n denotes the number of water molecules per formula unit of the salt. "n" is generally an integer between 1 and 9 but it can also have a fractional value. Non-limiting examples of metal nitrates in hydrated form of the present invention are $Co(NO_3)_2 \cdot nH_2O$, $Mn(NO_3)_2 \cdot nH_2O$, $Fe(NO_3)_3 \cdot nH_2O$, and $Ni(NO_3)_2 \cdot nH_2O$; wherein n is an integer between 1 and 9; preferably are $Co(NO_3)_2 \cdot 6H_2O$; $Mn(NO_3)_2 \cdot 4H_2O$; $Fe(NO_3)_3 \cdot 9H_2O$ and $Ni(NO_3)_2 \cdot 6H_2O$.

The term "starch" designates a polymeric carbohydrate comprising amylose and amylopectin polymer chains

as known in the art. Particularly, an amylose polymeric chain forms a linear structure by bonding α-(1→4) glycosidic bonds as depicted below (scheme 1).

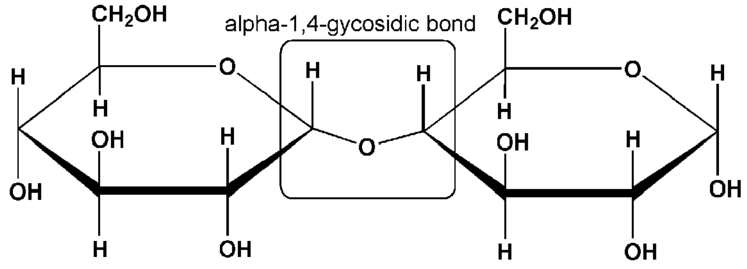


Scheme 1: Amylose chain

In particular, an amylopectin is a branched molecule comprising monomeric units of D-glucose linked by α-(1→4) glycosidic bonds, but also incorporating α-(1→6) glycosidic bonds as shown below:

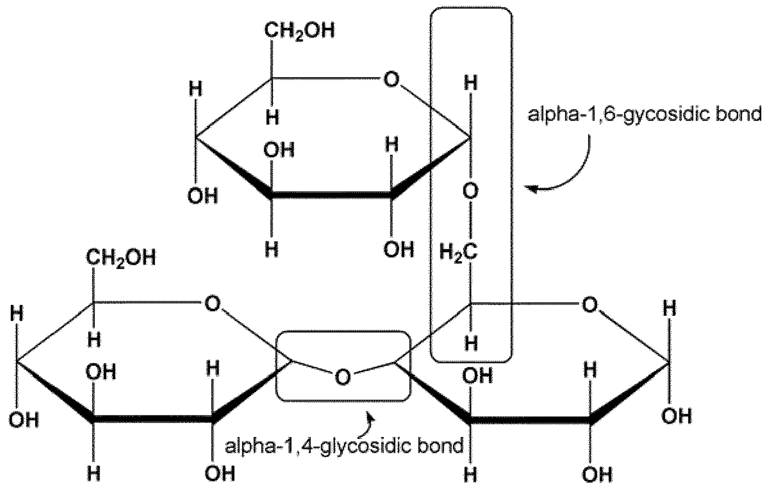


Scheme 2: Amylopectin chain

In a particular embodiment, the starch of step (a) of the process of the invention is selected from corn starch, potato starch, rice starch, wheat starch, tapioca starch, oat starch, sorghum starch, barley starch, quinoa starch, amaranth starch and mixtures thereof. In a preferred embodiment, the starch is corn starch.

In a particular embodiment, the starch of the invention comprises amylose in between 20-25 wt% relative to the total weight of the starch.

In an embodiment, the mixture of step (a) of the process of the invention is obtained by mixing the metal nitrate and the starch by mechanical means; preferably by mixing in a mortar or by ball milling. In a particular embodiment, the mixing is performed in absence or presence of a solvent. In a particular embodiment, the mechanical mixing is performed in the presence of a solvent such as water, ethanol, methanol, isopropyl alcohol, butanol, acetone, toluene or mixtures thereof; preferably, the solvent is water. In another particular embodiment, the mechanical mixing is performed in the absence of any solvent.

In an embodiment, the mixture of step (a) consist of a metal nitrate or metal nitrates and starch. Particularly, the mixture of step (a) do not comprise a solvent.

In the present invention, the authors have observed that mechanical mixing is used as a way of chemical activation, which induces bond activation by intramolecular friction allowing the assembly of hydrogen-bonded networks. Under mechanical forces, the large polarization of a nitrate group (present in the metal nitrate), derived from the N-O bond induces the formation of a hydrogen bond between the negatively charged oxygen of the nitrate group and the hydrogen of the hydroxyl groups of the starch. Hence, the hydrogen atoms of the hydroxyl groups contained in the amylose and amylopectin chains, form a hydrogen bond with the negatively charged oxygen of the nitrate group when the mechanical force is applied in the mortar. As a result, and thanks to both the axial and equatorial hydrogen atoms present in starch molecules, the metal nitrate groups are placed in a 2D fashion.

In a preferred embodiment, the mixture provided in step (a) of the process comprises a metal nitrate and starch in a weight ratio between 1:0.1 and 1:5; preferably, the ratio is between 1:0.5 and 1:3.5; more preferably, the mixture is in a ratio between 1:1 and 1:2.

In the second step of the process of the present invention (step (b)), the mixture obtained in step (a) is thermally decomposed at a temperature of at least 300°C; preferably by performing a controlled heat treatment under air for a determined time; more preferably under an airflow.

The authors of the present invention have observed that the heat treatment, also referred to as calcination, decomposes the starch and nitrate functional groups, and so metal ions are transformed into metal oxide nanosheets. Surprisingly, starch molecules act as molecular reactors and not as mere mechanical templates, as in the case of using graphene or copper oxide. Thus, starch is the sacrificial molecular reactor while the metal nitrate is the metal oxide precursor.

In a preferred embodiment, step (b) is performed at a temperature of between 300 and 1000 °C; preferably at a temperature of between 350 and 800 °C; more preferably at a temperature between 400 and 700 °C. In particular, step (b) comprises heating and cooling rates of between 1 and 20 °C/minute; preferably of around 10 °C/minute.

In a more preferred embodiment, step (b) is performed for duration of between 30 minutes to 5 hours; more preferably for between 1 to 3 hours; even more preferably, for 2 hours.

In an embodiment, step (b) is performed under air; preferably under airflow preferably under an air flow of at least 10 sccm/min; more preferably under an airflow of about 100 sccm/min.

In an embodiment, step (b) is performed at a temperature of between 400 and 800 °C during between 30 minutes and 5 hours and under air; preferably at a temperature of between 400 and 700 °C, during between 1 and 3 hours and under air.

In an embodiment; the process for producing metal oxide nanosheets of the invention consist of:

a) providing a mixture of a metal nitrate and starch; and

b) heating the mixture obtained in step (a) at a temperature of at least 300 °C until thermal decomposition of said mixture.

In a preferred embodiment, the process for producing metal oxide nanosheets of the invention consist of:

a) providing a mixture of a transition metal nitrate and starch; wherein the metal nitrate and the starch are in a weight ratio between 1:0.1 and 1:5; and

b) heating the mixture obtained in step (a) at a temperature of between 400 and 800 °C, during between 30 minutes and 5 hours under air.

The authors of the invention have observed that the method of the present invention as described above is considerably more simple than the known production techniques in the prior art. Thus, the economic costs of the process are reduced. Therefore, the metal oxide nanosheets can be produced in bulk in a risk-free manner.

*Metal oxide nanosheets*

A second aspect of the present invention is directed to metal oxide nanosheets obtainable by the process of the present invention in any of its particular embodiments, wherein the metal oxide nanosheets are porous; preferably, wherein the metal oxide nanosheets have specific pore volumes of between 0.01 to 0.8 $cm^3/g$ and optionally pore diameters of between 10 and 1500 Å.

In a particular embodiment, the metal oxide nanosheets of the invention have sheet structure with a larger lateral dimensions than thickness; preferably wherein the lateral dimensions is at least 2 times larger than the thickness of the nanosheets; preferably at least 3 times; more preferably at least 5 times; even more preferably at least 10 times; even more preferably between 2 and 50 times.

In a particular embodiment the metal oxide nanosheets of the present invention have a lateral dimension of at least 70 nm; preferably of between 80 and 1000 nm; more preferably of between 90 and 700 nm; even more preferably of between 100 and 500 nm.

In a particular embodiment the metal oxide nanosheets of the present invention have a thickness of below 70 nm; more preferably of below 60 nm; even more preferably of below 50 nm; even much more preferably below 40.

In a particular embodiment the metal oxide nanosheets of the present invention have a thickness of between 0.1 and 70 nm; even more preferably of between 1 and 60 nm; even much more preferably of between 5 and 55 nm; preferably of between 10 and 50 nm; more preferably of between 20 and 40 nm.

In a particular embodiment, the metal oxide nanosheets of the invention have a surface area of between 1 and 100 $m^2/g$; preferably of between 10 and 50 $m^2/g$; more preferably of between 15 and 30 $m^2/g$. The surface area of the nanosheets of the present invention has been measured by techniques known in the art such as gas adsorption, particularly using a multipoint Brunauer Emmett Teller (BET) surface analyzer.

In a particular embodiment, the metal oxide nanosheets of the invention are porous; preferably having specific pore volume in the range of between 0.01 to 0.8 $cm^3/g$; more preferably of between 0.02 and 0.5 $cm^3/g$; even more preferably between 0.05 and 0.2 $cm^3/g$.

In a particular embodiment, the metal oxide nanosheets of the invention comprise pores; wherein the pore diameters of the pores are between 10 and 1500 Å; preferably between 50 and 1300 Å; more preferably between 100 and 1200 Å.

The pore volume and the pore diameters of the metal oxide nanosheets of the present invention have been measured by techniques known in the art such as gas adsorption, particularly using the BJH method as known in the art.

In a particular embodiment, the metal of the metal oxide nanosheets is a transition metal, an alkaline metal, an alkaline earth metal or a mixture thereof; preferably a transition metal; more preferably a transition metal; even more preferably a metal selected from Mn, Fe, Co, Ni, Cr, Sc, V, Zr, Pd, Ti, Cu and mixtures thereof; even much more preferably selected from Mn, Fe, Co and Ni.

In a particular embodiment, the metal oxide of the metal oxide nanosheets of the invention, is selected form $Mn_2O_3$, $Fe_2O_3$, NiO, $Co_3O_4$ and mixtures thereof.

In a particular embodiment, the metal oxide nanosheets of the invention are crystalline; preferably they comprise grains; more preferably they comprise at least two grains.

In a particular embodiment, the metal oxide nanosheets of the invention are layered, preferably they comprise at least two layers; more preferably wherein each layer has a thickness of between 0.01 and 100 nm.

In a particular embodiment, the metal oxide nanosheets of the invention are anisotropic (i.e. exhibit anisotropy). The term "anisotropy" regarding the metal oxide nanosheets of the invention is directed to physical properties of the material that show directional dependence; i.e. different values when measured along axes in different directions. For example, the metal oxide nanosheets of the present invention provide a restriction in the z-direction, opening in the *x* and *y* directions.

In a particular embodiment, the metal oxide nanosheets of the invention are anisotropic (i.e. exhibit anisotropy); preferably have anisotropic charge transfer properties.

In an embodiment, the metal oxide nanosheets obtainable by the process of the present invention are porous and have lateral dimensions at least two times larger than their thickness; wherein the thickness of the metal oxide nanosheets is below 100 nm; and wherein the metal of the metal oxide is a metal selected from Mn, Fe, Co, Ni, Cr, Sc, V, Zr, Pd, Ti, Cu and mixtures thereof.

Another aspect of the present invention is directed to metal oxide nanosheets being porous. All the particular embodiments described for the characteristics of the metal nanosheets described above may be applied to the metal nanosheets of the present aspect.

The authors of the present invention have observed that the metal oxide nanosheets are crystalline, have high active surface areas and low amounts of residues. In addition, they exhibit excellent mechanical properties such as strength and flexibility.

*Uses*

Another aspect of the present invention is directed to the use of the metal oxide nanosheets of the present invention in any of its particular embodiments, as electrode active materials; preferably in batteries; more preferably in in metal-ion batteries or in metal-air batteries; even more preferably in lithium or sodium batteries.

Another aspect of the present invention is directed to the use of the metal oxide nanosheets of the present invention in any of its particular embodiments, as catalyst; preferably as electrocatalyst; more preferably as oxygen catalyst.

*Electrode*

An aspect of the present invention is directed to an electrode comprising:

- the metal oxide nanosheets of the invention;
- optionally an electrically conductive additive,
- optionally a binder; and
- a conductive material;

wherein the metal oxide nanosheets of the invention, optionally an electrically conductive additive, and optionally a binder, are coating the conductive material; preferably wherein the conductive material is a metal foil or a metal mesh.

In an embodiment, the conductive material is a metal foil or a metal mesh; more preferably a nickel, copper or aluminum foil or mesh.

In an embodiment, the electrode of the invention comprises a conductive material coated with a mixture comprising:

- the metal oxide nanosheets of the invention,
- a binder; and
- a electrically conductive additive.

In a particular embodiment, the metal oxide nanosheets of the mixture are in between 50 and 90 wt% of the total weight of the mixture; preferably they are between 60 and 80 wt%; more preferably around 70 wt%.

The term "binder" as used herein refers to a compound providing an increased mechanical strength, which holds the components of the electrode together. The binder of the invention may include but is not limited to polymers and/or other materials that remain stable in the electrode environment. The binder may include, for example, polymeric materials such as polytetrafluoroethylene (PTFE), polyethylene (PE), polypropylene (PP), polyisobutylene (PIB), thermoplastics such as polybutylene terephthalate (PBT) or polyamides, polyvinylidene fluoride (PVDF), silicone-based elastomers such as polydimethyl siloxane (PDMS) or rubber materials such as natural rubber (NR), ethylene propylene diene monomer rubber (EPDM) or combinations thereof. In a particular embodiment, the binder is a polymeric binder; preferably polyvynilidene fluoride (PVDF). In an embodiment, the binder is in between 1 and 20 wt% of the total weight of the mixture of the electrode; preferably between 5 and 15 wt%; more preferably around 10 wt%.

In a particular embodiment, the electrically conductive additive comprises carbon; preferably is selected from graphite, carbon black, graphene, carbon nanotubes, acetylene black, Kentjen black, channel black, activated carbon, furnace black, lamp black, thermal black and combinations thereof; more preferably is carbon black or acetylene black; even more preferably acetylene black. In a particular embodiment, the electrically conductive additive is in between 0.1 and 50 wt% of the total weight of the mixture of the electrode; preferably between 10 and 40 wt%; more preferably between 15 and 35 wt%; much more preferably around 20 wt%.

In an embodiment, the mixture of the electrode forms a coating of between 10 and 50 microns thick; preferably of between 20 and 40 microns thick. In an embodiment, the coating is homogeneous.

In an embodiment, the electrode of the invention comprises a conductive material coated with a mixture consisting of:

- the metal oxide nanosheets of the invention,
- a polymeric binder in between 1 and 20 wt% of the mixture; and
- an electrically conductive additive in between 0.1 and 50 wt% of the total weight of the mixture.

In an embodiment, the electrode of the invention comprises a conductive material coated with a mixture consisting of:

- the metal oxide nanosheets of the invention in a 70 wt%,
- a polymeric binder in 10 wt%; and
- a electrically carbon conductive additive in a 20 wt% of the total weight of the mixture;

wherein the conductive material is a metal foil or mesh.

In an embodiment, the metal oxide nanosheets of the invention are the active material of the electrode.

In an embodiment, the electrode of the invention has specific capacity values of over 150 mAh/g measured at 25 mA/g current density in a cell (such as a Li-battery); preferably at least 500 mAh/g; more preferably at least 600 mAh/g; even more preferably at least 700mAh/g.

In an embodiment, the electrode of the invention has specific capacity values of between 800 and 1500 mAh/g measured at 25 mA/g current density; preferably of between 900 and 1200 mAh/g measured at 25 mA/g current density; more preferably of about 1170, 1125, 1135 and 1010 mAh/g respectively for $Fe_2O_3$, $Co_3O_4$, NiO, $Mn_2O_3$ nanosheets at 25 mA/g current density; preferably wherein the electrode is part of a Li-ion battery.

In an embodiment the electrode of the invention has specific capacity values of over 150 mAh/g measured at 25 mA/g current density in a cell (such as a Na battery); preferably of between 150 and 800 mAh/g; more preferably specific capacities of 700, 590 and 170 mAh/g respectively for $Co_3O_4$ $Fe_2O_3$ and $Mn_2O_3$ nanosheets at 25 mA/g current density; preferably wherein the electrode is part of Na-ion battery.

In an embodiment, the electrode of the invention has specific capacity values of over 500 mAh/g measured at

25 mA/g current density in a cell (such as a Li-$O_2$-battery); preferably at least 600 mAh/g; more preferably at least 700 mAh/g. In an embodiment, specific capacity values of about 1470, 725 and 728 mAh/g are measured for LiTFSI electrolyte and 2390, 1659 and 734 mAh/g for LiTFSI + $LiNO_3$ electrolyte respectively for $Mn_2O_3$, NiO and $Co_3O_4$ nanosheets at 25 mA/g current density; preferably wherein the electrode is part of Li-$O_2$ battery.

In an embodiment, the electrode of the invention has at least a 40, 50 or 60 % of pseudocapacitive ion storage; preferably at least a 70%; more preferably of Li or Na ion storage. In an embodiment, the maximum pseudocapacitive contribution for $Fe_2O_3$, $Co_3O_4$, NiO and $Mn_{2O}3$ are 90%, 95%, 92% and 85% while working as Li-ion battery anodes and the maximum pseudocapacitive contribution for $Fe_2O_3$, $Co_3O_4$, and $Mn_2O_3$ is 79%, 79% and 70% while working as Na-ion battery electrodes.

The authors of the present invention have observed that metal oxide nanosheets have the ability to deliver high specific capacitance, as opposed to their corresponding bulk material; thus, the electrodes of the invention has large specific capacities (mAh/g) and high columbic efficiency.

*Process*

In another aspect, the present invention is directed to a process for producing the electrode of the invention, comprising the following steps:

a) providing the metal oxide nanosheets of the invention in any of their particular embodiments, wherein the metal oxide nanosheets are optionally in admixture with an electrically conductive additive and/or a binder; and
b) coating a conductive material with the metal oxide nanosheets or with the mixture of step (a).

In a particular embodiment, the electrically conductive additive of step (a) comprises carbon; preferably is selected from graphite, carbon black, graphene, carbon nanotubes, acetylene black, Kentjen black, channel black, activated carbon, furnace black, lamp black, thermal black and combinations thereof; more preferably is carbon black or acetylene black; even more preferably acetylene black.

In a particular embodiment, the electrically conductive additive of step (a) is in between 0.1 and 50 wt% of the dry total weight of the mixture; even much more preferably in between 10 and 40 wt%; even much more preferably in between 15 and 35 wt%.

The authors of the present invention have observed that electrically conductive carbon materials provide electrical and thermal conductivity, as well as good corrosion resistance to the electrode of the invention.

In a particular embodiment, the binder of step (a) is preferably a polymeric binder; more preferably a polyvinylidene fluoride. In an embodiment, the binder is in between 1 and 20 wt% of the dry total weight of the mixture; preferably between 5 and 15 wt%.

The term "binder" as used herein refers to a compound providing an increased mechanical strength, which holds the components of the electrode together. The binder may include but is not limited to polymers and/or other materials that remain stable in the electrode environment. The binder may include, for example, polymeric materials such as polytetrafluoroethylene (PTFE), polyethylene (PE), polypropylene (PP), polyisobutylene (PIB), thermoplastics such as polybutylene terephthalate (PBT) or polyamides, polyvinylidene fluoride (PVDF), silicone-based elastomers such as polydimethyl siloxane (PDMS) or rubber materials such as natural rubber (NR), ethylene propylene diene monomer rubber (EPDM) or combinations thereof.

In a preferred embodiment, the binder is polyvynilidene fluoride (PVDF).

In a particular embodiment, the metal oxide nanosheets of step (a) are in between 50 and 90 wt% of the dry total weight of the mixture; preferably they are between 60 and 80 wt%; more preferably they are around 70wt%.

In a particular embodiment, the mixture of step (a) further comprises a solvent; preferably an organic solvent; more preferably a pyrrolidone.

In a particular embodiment, the mixture of step (a) consist of: the metal oxide nanosheets of the invention, an electrically conductive additive and a binder in a solvent. In an embodiment, the mixture is a slurry.

In a particular embodiment, the conductive material of step (b) is a metal foil or mesh; preferably a nickel, copper or aluminum foil or mesh.

In a particular embodiment, the coating of step (b) is performed by any coating method known in the art; preferably by blade coating; more preferably by a doctor blade coating method.

In a particular embodiment, the step (b) of the process of the invention comprises a drying step; preferably a drying step under air.

*Cell*

In an additional aspect, the present invention is directed to a cell comprising:

- a positive electrode and a negative electrode; wherein one electrode is an electrode as defined in any of the particular embodiments of the present invention; and
- an electrolyte comprising active species.

In an embodiment, the electrolyte of the cell comprises active species; particularly ions; more particularly cations and anions. The active species (such as ions) may be oxidized or reduced.

In an embodiment, the cell of the invention comprises:

- a positive electrode and a negative electrode; wherein
    - ◦ one electrode is an electrode as defined in any of the particular embodiments of the present invention, and
    - ◦ the other electrode is a metal electrode; and
- an electrolyte comprising active species.

In a particular embodiment, the electrolyte and the metal electrode comprise a chemical element in common; preferably comprise an element selected from Li, Na, K and Mg; more preferably lithium or sodium.

In a more particular embodiment, the metal electrode is a lithium or sodium metal electrode.

In a more particular embodiment, the electrolyte comprises lithium; preferably a lithium compound such as lithium nitrate; lithium tetrafluoroborate, lithium hexafluorophosphate, lithium hexafluoroarsenate, lithium iodide, lithium trifluoromethane sulfonate, lithium bis(trifluoromethanesulfonyl)imide, lithium bis(perfluoroethylsulfonyl) imide, lithium bis(fluorosulfonyl)imide, lithium (perfluoroethylsulfonyl)(fluorosulfonyl) imide, lithium perchlorate, lithium bis(oxalate)borate and mixtures thereof; more preferably lithium bis(trifluoromethanesulfonyl)imide, lithium hexafluorophosphate ($LiPF_6$), lithium nitrate ($LiNO_3$) or combinations thereof.

In a particular embodiment, the electrolyte comprises $LiPF_6$ in a carbonate; even more preferably $LiPF_6$ in ethylene carbonate or/and ethyl methyl carbonate.

In another particular embodiment, the electrolyte comprises lithium bis(trifluoromethanesulfonyl)imide and/or $LiNO_3$ in an organic solvent; even more preferably lithium bis(trifluoromethanesulfonyl)imide and/or $LiNO_3$ in tetraethyleneglycol dimethyl ether.

In a more particular embodiment, the electrolyte comprises sodium; preferably $NaPF_6$; more preferably $NaPF_6$ in ether; even more preferably $NaPF_6$ in diglyme (bis(2-methoxyethyl) ether).

In an embodiment, the cell of the invention comprises:

- a positive electrode and a negative electrode; wherein
    - ◦ one electrode is an electrode as defined in any of the particular embodiments of the present invention, wherein the conductive material of the electrode is a metal foil or a metal mesh; and
    - ◦ the other electrode is a lithium metal electrode; and
- an electrolyte comprising lithium active species.

In an embodiment, the cell of the invention comprises:

- a positive electrode and a negative electrode; wherein
    - ◦ one electrode is an electrode as defined in any of the particular embodiments of the present invention, wherein the conductive material of the electrode is a metal foil; preferably an aluminum foil; and
    - ◦ the other electrode is a sodium metal electrode; and
- an electrolyte comprising sodium active species.

In a particular embodiment, the metal-air batteries of the invention are selected from lithium-air or sodium-air batteries; preferably from secondary lithium-air or sodium-air batteries. The expression "secondary batteries" refers to rechargeable batteries, wherein the combination of the electrolyte and the negative electrode of said batteries enable both plating/alloying (or intercalation) of lithium or sodium onto the electrode (i.e. charging) as well as stripping/dealloying (or de-intercalation) of lithium or sodium from the electrode (i.e. discharging).

The cells of the invention may be in a variety of sizes and configurations and in any suitable fashion that is known to those skilled in the art, including, without being limited to, planar, prismatic, jelly roll, w-fold and stacked cells.

The cell of the present invention may comprise a separator; preferably a microfiber separator; more preferably a glass microfiber separator.

The cell of the present invention may comprise a power/load source. The power/load source may be any external electrical device such as an electrical grid, an electric vehicle, a domestic appliance or a sensor, that draws/transfers energy from/to the battery. In general, the power/load source have controllable voltages and/or current supplies or uptakes.

The cell of the present invention may comprise an external case.

The authors of the present invention, have observed that the use of an electrode comprising the metal oxide nanosheets of the invention, increase the electrochemical performance of cells. In addition, the metal oxide nanosheets of the electrode of the invention act as catalyst of oxidation/reduction oxygen reactions on the electrode.

*System*

Another aspect of the invention is directed to an energy storage and/or delivery system comprising at least one cell according to the invention. In particular, the cell may act as a battery; particularly as a secondary and/or rechargeable battery, i.e. the battery may be configured to be reversibly charged and discharged.

The present invention will be described in further detail with reference to the following examples. These examples are for illustrative purposes only and are not intended to limit the scope of the present invention.

## EXAMPLES

The invention is illustrated by means of the following examples that in no case limit the scope of the invention.

***Example 1***

***Solid-state synthesis of metal oxide nanosheets:***

The synthesis of $Co_3O_4$ nanosheets was performed by mixing 1g of cobalt nitrate hexahydrate $Co(NO_3)_2{\cdot}6H_2O$ (Honeywell) and 1g of corn starch (Sigma Aldrich) for 15 minutes in an agate mortar. The mixture was subsequently annealed at 600°C for 2 hours in a tube furnace (OTF-1200X, MTI Corporation) under an airflow to yield nanosheets. The heating and cooling rates used were 10°C/minute.

The same procedure as previously described for $Co_3O_4$ nanosheets was followed to obtain metal oxide (MO) nanosheets of Mn, Fe and Ni, using the following starting materials: $Mn(NO_3)_2{\cdot}4H_20$ (Fisher scientific)/corn starch in a weight ratio of 1:1; $Fe(NO_3)_3{\cdot}9H_20$ (Honeywell)/corn starch in a ratio of 1:2; and $Ni(NO_3)_2{\cdot}6H_20$ (Fisher scientific)/corn starch in a ratio of 1:1. Thus, $Mn_2O_3$, $Fe_2O_3$, $Co_3O_4$, and NiO nanosheets were obtained.

The elemental composition and oxidation states of each sample were studied by XPS (INA-X SPECS) analysis. In addition, the textural properties an specific surface area were measured using the multipoint Brunauer Emmett Teller (BET) surface analyzer (ASAP2020, Micromeritics). Results regarding the porosity and surface area of the different nanosheets obtained by the method of the invention are showed on Table 1 below.

| | $Mn_2O_3$ | $Fe_2O_3$ | NiO | $Co_3O_4$ |
|---|---|---|---|---|
| BET surface area $m^2/g$ | 18.9825 | 21.3363 | 18.2429 | 21.4709 |
| BJH pore volume $cm^3/g$ | 0.0507 | 0.18615 | 0.0676 | 0.1015 |
| BJH pore diameter Å | 1110.037 | 306.423 | 117.89 | 192.711 |

***Characterization of starch, metal nitrates and corresponding mixtures of each metal nitrate and starch, by thermogravimetric analysis (TGA)***

Characterization of starch, metal nitrates $Mn(NO_3)_2{\cdot}4H_20$, $Fe(NO_3)_3{\cdot}9H_20$, $Ni(NO_3)_2{\cdot}6H_20$ and $Co(NO_3)_2{\cdot}6H_2O$ and the mixtures starch + $Mn(NO_3)_2{\cdot}4H_20$, starch + $Fe(NO_3)_3{\cdot}9H_20$, starch + $Ni(NO_3)_2{\cdot}6H_20$ and starch + $Co(NO_3)_2{\cdot}6H_2O$ was performed in a thermogravimetric analyzer. TGA analysis (Q50, TA Instruments) in the range of 30-700 °C verified the temperature required for the reaction completion. For each one of the metal oxides, a sample of a determined mass was continuously measured while the temperature increased over time. The analysis confirmed the complete removal of starch below 500 °C. Thus, by comparing the initial and final weight on the TGA results, it was observed that the metal oxide nanosheets obtained have a low amount of residues (are pure) as shown in Fig.3 which shows the thermogravimetric

analysis of (a) (i) starch, (ii) nickel nitrate and (iii) nickel nitrate and starch; (b) (i) starch, (ii) iron nitrate and (iii) iron nitrate and starch; (c) (i) starch, (ii) manganese nitrate and (iii) manganese nitrate and starch; and (c) (i) starch, (ii) cobalt nitrate and (iii) cobalt nitrate and starch.

***Characterization of MO nanosheets by X-ray diffraction analysis***

The phase purity of the obtained MO nanosheets was verified through XRD analysis (Empyrean, PANalytical). Metal nanosheets of $Mn_2O_3$, $Fe_2O_3$, $Co_3O_4$, and NiO prepared by the method of the present invention were characterized by X-ray diffraction.

The analysis confirmed the crystallinity and phase purity of the obtained metal oxide nanosheets, as depicted in FIG.4.

***Characterization of MO nanosheets by Scanning Electron Microscope (SEM) and by Transmission Electron Microscopy (TEM)***

2D morphology and crystallinity of the metal oxide sheets were confirmed through SEM (Helois NanoLab 600i, FEI) and TEM (Talos F200X, FEI) microscopies. Metal oxide nanosheets of $Mn_2O_3$, $Fe_2O_3$, $Co_3O_4$, and NiO, obtained following the method of the present invention, were characterized by SEM and TEM techniques. The images depicted in FIG.5, FIG.6, FIG.7 and FIG.8 corresponding to $Mn_2O_3$, $Fe_2O_3$, $Co_3O_4$, and NiO nanosheets confirmed their bi-dimensional nature, as well as porosity and high crystallinity of the metal oxide nanosheets of the present invention. The thickness of several nanosheets (a significate number of samples) have been measured using electron microscopy. Results show that the metal oxide nanosheets of the present invention have lengths of between 100 nm and 500 nm and thickness between 20 nm and 40 nm.

***Example 2***

***Application of MO nanosheets in electrodes for metal-ion batteries.***

Electrodes were produced comprising the MO nanosheets described in Example 1. A 70 wt% of MO nanosheets, 20 wt% of conductive carbon (acetylene black) and 10 wt% PVDF (polyvinylidene fluoride) binder were mechanically mixed and added to a NMP (N-Methyl-2-pyrrolidone) solvent to form a slurry. Copper foils were coated with said slurry using the doctor blade method to form a 30 $\mu$m thick film, thus, obtaining an electrode laminate.

The electrode laminates were cut into 1.2 mm diameter discs and used as an electrode for Li-ion half-cells (CR2032 type) having a lithium metal electrode and 1M $LiPF_6$ in EC/EMC (ethylene carbonate/ Ethyl methyl carbonate) electrolyte and using glass microfiber separator (GF/B grate - GE healthcare life sciences) for Li-half cells.

All cells were assembled in an argon-filled glovebox with oxygen and moisture levels below 1ppm. The electrochemical rate and cycling performances were studied using an automatic battery tester (NEWARE BTS-4000) in the voltage window of 0-3V at constant temperature of 25 °C. The specific capacities were measured in terms of mAh/g at different current densities such as 25, 50, 100, 200, 500, 1000, 2000, 5000 mA/g as shown in Fig.9. Cyclic voltammetry (CV) as well as electrochemical impedance spectroscopy (EIS) were performed with a potentiostat workstation (ZIVE SP1). The CV characteristics were investigated at different scan rates (0.1, 0.3, 0.5, 1, 2, 5, 10 mV/s). CV curves were further segregated into diffusion and pseudocapacitance contributions using the power-law equations for quantitative evaluation of the pseudocapacitance to the overall specific capacities as shown in Fig. 11 (a)- (b)

The experiments were repeated for Na-ion half cells following a similar methodology of the Li-ion half cells. However, copper foils were replaced with aluminium foils and 1M $NaPF_6$ in diglyme (*bis(2-methoxyethyl) ether)* was the electrolyte. The rate studies were limited to the current densities up to 1000 mA/g.

***Example 3***

***Application of MO nanosheets in electrodes for Li-air batteries.***

MO nanosheets obtained as described in Example 1 were also tested as ORR/OER (oxygen reduction reaction/ oxygen evolution reaction) catalysts in metal-air batteries; particularly as Li-$O_2$ battery cathodes. Copper foils in Li-ion batteries were replaced with Ni mesh to allow the $O_2$ gas flow. Prior to the galvanostatic studies, batteries were placed under oxygen atmosphere (1 atm pressure).

The reaction mechanism of a lithium-air battery may be represented by Equation (I):

$$4Li + O_2 \leftrightarrow 2Li_2O$$

$$2Li + O_2 \leftrightarrow Li_2O_2 \qquad \text{[Equation (I)]}$$

The lithium species derived from the anode reacts with oxygen introduced from the cathode to generate a lithium oxide during the battery discharging process, and oxygen is reduced (oxygen reduction reaction "ORR"). During the discharging process, $Li_2O_2$ is deposited in the cathode. However, during the battery charging process, lithium oxide is reduced and oxygen is generated by oxidation (oxygen evolution reaction "OER").

The electrochemical performances of two systems were compared as shown in Fig. 10; the first one of the Li-$O_2$ batteries comprised a metal anode and an electrolyte comprising 0.2 M LiTFSI (lithium bis(trifluoromethanesulfonyl)imide) and 0.8 M $LiNO_3$ in TEGDME (tetraethyleneglycol dimethyl ether) see FIG 10A; whereas the other comprised a metal anode and an electrolyte of 1 M LiTFSI in TEGDME (Sigma Aldrich), see FIG 10B. Then, each of the anodes were combined with three cathodes comprising different MO nanosheets of $Co_3O_4$, NiO and $Mn_3O_4$; respectively, 6 different Li-$O_2$ batteries were tested in total by applying a current of 25 mA/g to obtain the specific capacity in all the cases, as shown in FIGs 10A and 10B. A comparative diagram is depicted in FIG 10C showing the differences in discharge capacity for each one of the three cathodes comprising MO nanosheets and the two lithium anodes tested.

$Mn_3O_4$ electrodes exhibited the best electrochemical performance as cathode material among the different MO nanosheets. Very high specific capacities and the higher columbic efficiency confirm the suitability of these MO nanosheets as Li-$O_2$ battery cathodes.

In conclusion, experimental results show that a novel scalable, inexpensive and environmentally friendly method for the large scale production of metal oxide nanosheets. Starch act as a molecular reactor in this method by forming hydrogen bonds with metal nitrate salts. Starch molecules are decomposed during the calcination step. MO nanosheets synthesized through this method demonstrated excellent electrochemical performance in Li-ion, Na-ion and Li-$O_2$ batteries. Superior electrochemical performances are attributed to the 2D microstructure and porosity that enable superior contact with electrolyte solution and effective accommodation of volume change during charge-discharge process.

## Claims

1. A process for producing metal oxide nanosheets comprising the steps of:

   a) providing a mixture of a metal nitrate and starch; and
   b) heating the mixture obtained in step (a) at a temperature of at least 300 °C until thermal decomposition of said mixture.

2. The process according to claim 1, wherein the metal nitrate of step (a) is a transition metal nitrate, an alkaline metal nitrate, an alkaline earth metal nitrate or a mixture thereof; preferably a transition metal nitrate selected from the group consisting of manganese nitrate, iron nitrate, cobalt nitrate, nickel nitrate and mixtures thereof.

3. The process according to any of claims 1 or 2, wherein the starch of step (a) is selected from corn starch, potato starch, rice starch, wheat starch, tapioca starch, oat starch, sorghum starch, barley starch, quinoa starch, amaranth starch and mixtures thereof; preferably corn starch.

4. The process according to any of claims 1 to 3, wherein the mixture of step (a) is a solid mixture obtained by mixing a metal nitrate and starch by mechanical means; and/or wherein the mixture of step (a) comprises a metal nitrate and starch in a weight ratio of between 1:0.1 and 1:5.

5. The process according to any of claims 1 to 4, wherein the thermal decomposition of step (b) is performed at a temperature of between 400 and 800°C under air and during between 30 minutes and 5 hours.

6. The process according to any of claims 1 to 5, consisting of

   a) providing a mixture of a transition metal nitrate and starch; wherein the metal nitrate and the starch are in a weight ratio of between 1:0.1 and 1:5; and
   b) heating the mixture obtained in step (a) at a temperature of between 400 and 800 °C during between 30 minutes and 5 hours under an air flow until thermal decomposition of said mixture; preferably under an air flow of at least 10 sccm/min.

**7.** Metal oxide nanosheets obtainable by the process according to any of claims 1 to 6; wherein the metal oxide nanosheets are porous.

**8.** The metal oxide nanosheets according to claim 7,
wherein the metal of the metal oxide nanosheets is a transition metal, an alkaline metal, an alkaline earth metal or a mixture thereof; preferably wherein the metal of the metal oxide nanosheets is selected from the group consisting of manganese, iron, cobalt, nickel and mixtures thereof; and
wherein the metal oxide nanosheets have a thickness of below 70 nm; preferably of below 50 nm; and/or
wherein the lateral dimensions or the metal oxide nanosheets are at least 2 times larger than their thickness; and/or
wherein the metal oxide nanosheets have a specific pore volumes in the range of 0.01 to 0.8 $cm^3/g$ and optionally, pore diameters of between 10 and 1500 Å; and/or
wherein the metal oxide nanosheets are crystalline.

**9.** Use of the metal oxide nanosheets as defined in any of claims 7 or 8 as electrode active materials.

**10.** Use of the metal oxide nanosheets as defined in any of claims 7 or 8 as catalysts;
preferably as oxygen catalyst.

**11.** An electrode comprising:

- the metal oxide nanosheets as defined in any of claims 7 or 8;
- optionally an electrically conductive additive,
- optionally a binder; and
- a conductive material;

wherein the metal oxide nanosheets of the invention, optionally an electrically conductive additive, and optionally a binder, are coating the conductive material; preferably wherein the conductive material is a metal foil or a metal mesh.

**12.** A process for producing an electrode as defined in claim 11, comprising the following steps:

- providing the metal oxide nanosheets as defined in claims 7 or 8;

wherein the metal oxide nanosheets are optionally in admixture with an electrically conductive additive, and/or a binder;

(a) coating a conductive material with the metal oxide nanosheets or with the mixture of step (a), preferably wherein the conductive material is a metal foil or a metal mesh.

**13.** A cell comprising:

(c) a positive electrode and a negative electrode; wherein one electrode is an electrode as defined in claim 11; and optionally the other electrode is a metal electrode; and
(d) an electrolyte comprising active species.

**14.** An cell according to claim 13, wherein between 60 and 99% of the total charge storage capacity of the cell is ion charge storage; preferably diffusion independent pseudocapacitance charge storage; more preferably Li or Na diffusion independent pseudocapacitance charge storage.

**15.** An energy storage and/or delivery system comprising at least a cell according to claim 14.

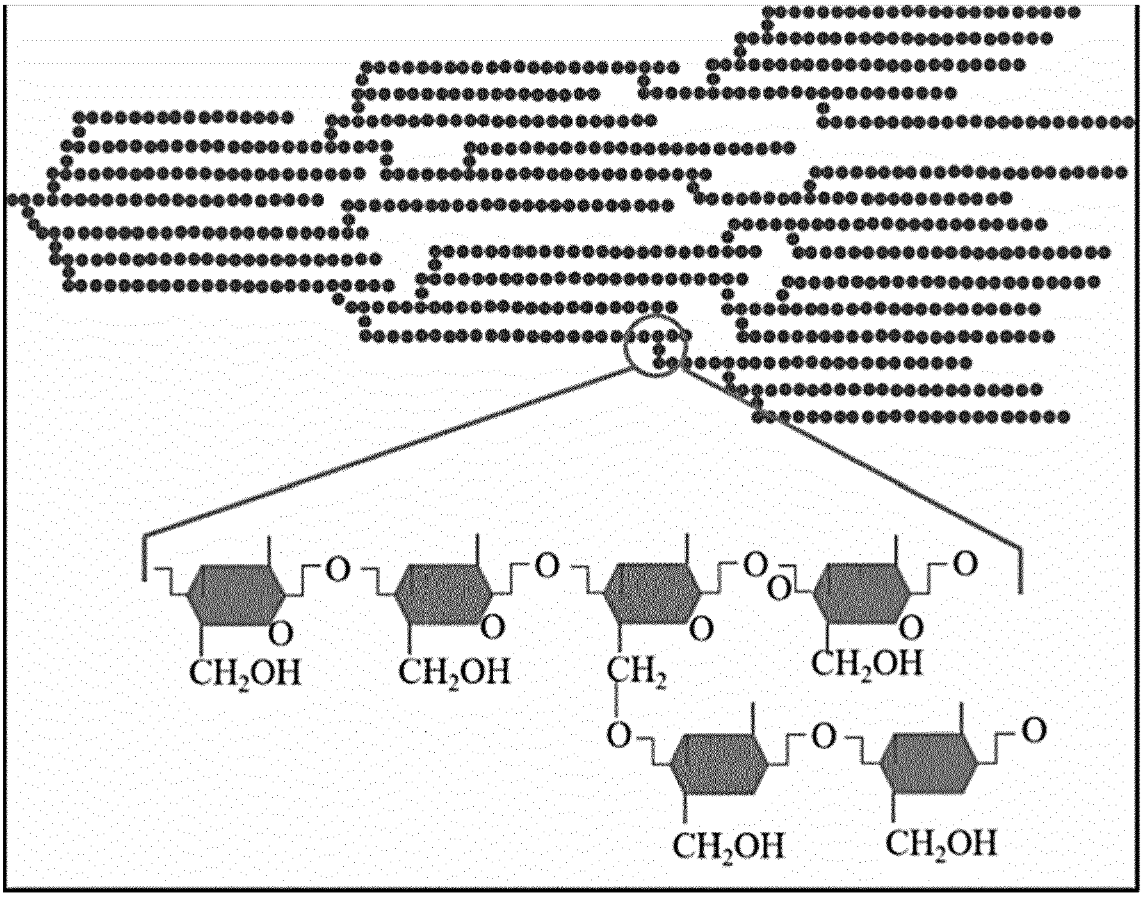

Figure 1

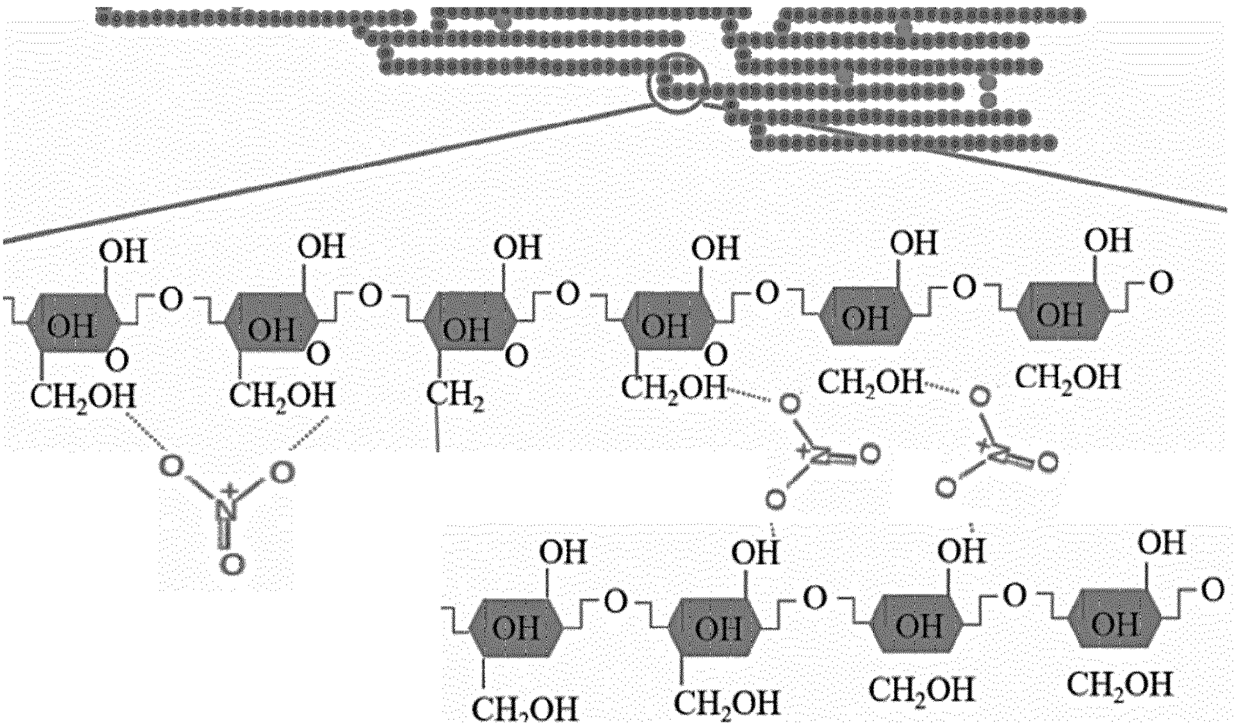

Figure 2

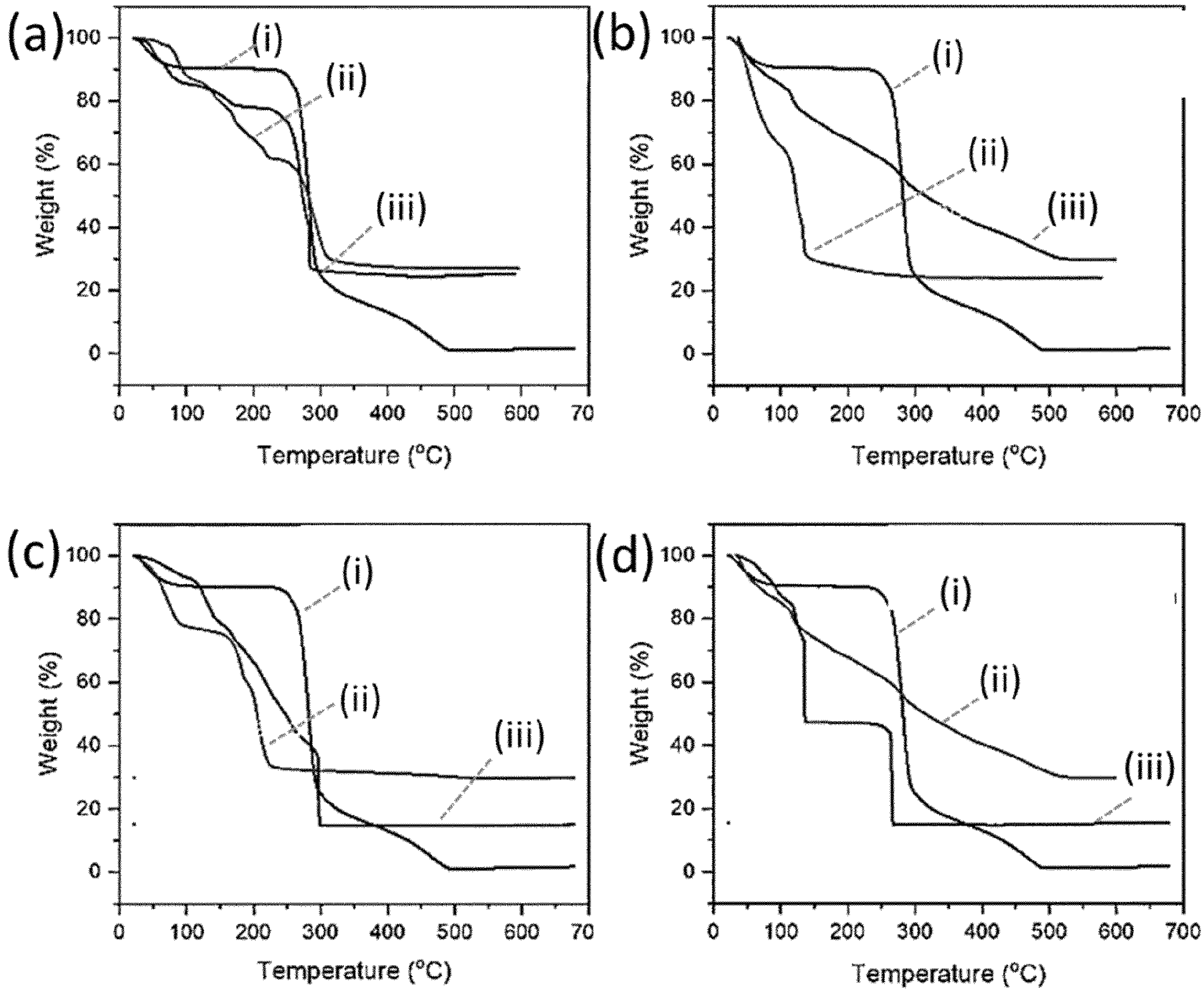
(a)
(b)
(c)
(d)
(i)
(ii)
(iii)
Weight (%)
Temperature (°C)
0
100
200
300
400
500
600
700
-20
0
20
40
60
80
100

Figure 3

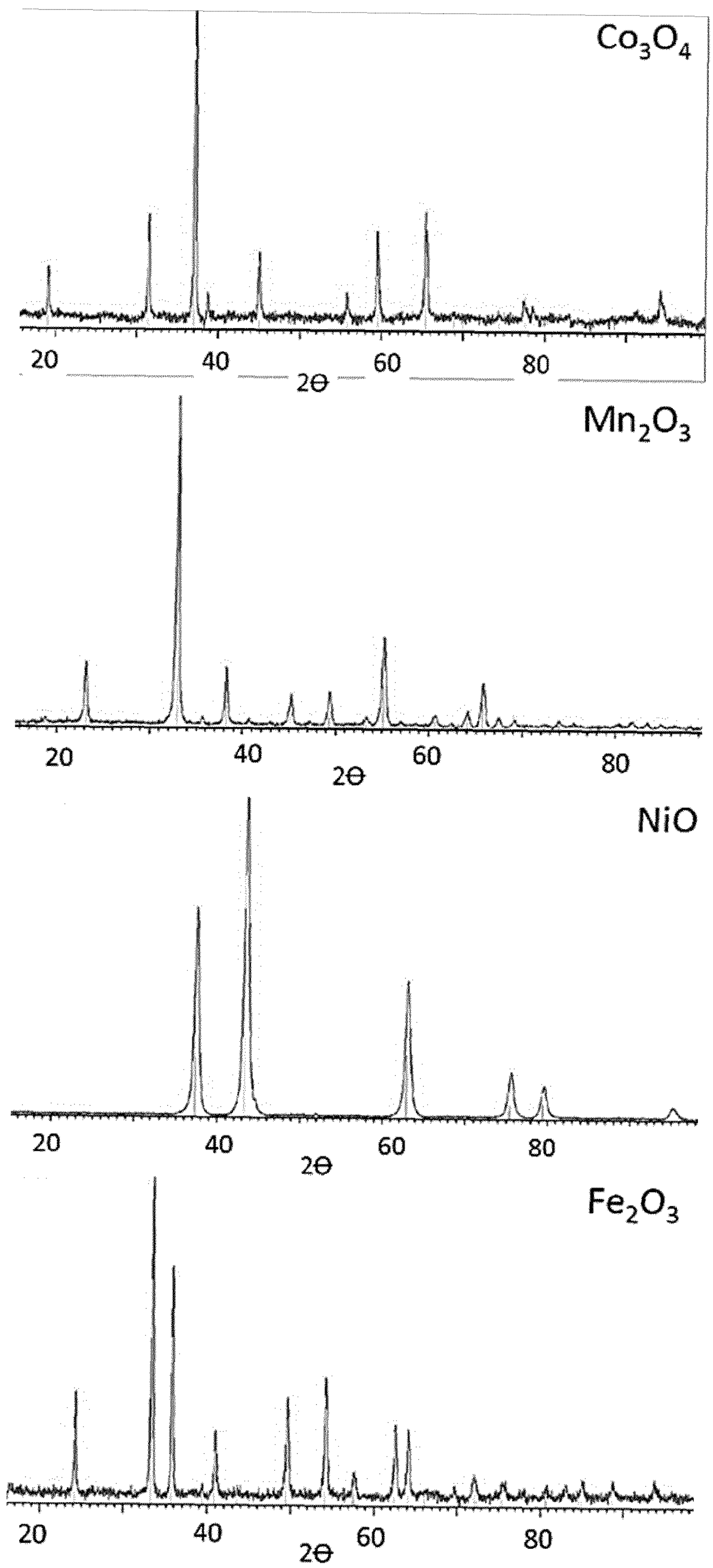
Co$_3$O$_4$
20 40 60 80
2Θ
Mn$_2$O$_3$
20 40 60 80
2Θ
NiO
20 40 60 80
2Θ
Fe$_2$O$_3$
20 40 60 80
2Θ

Figure 4

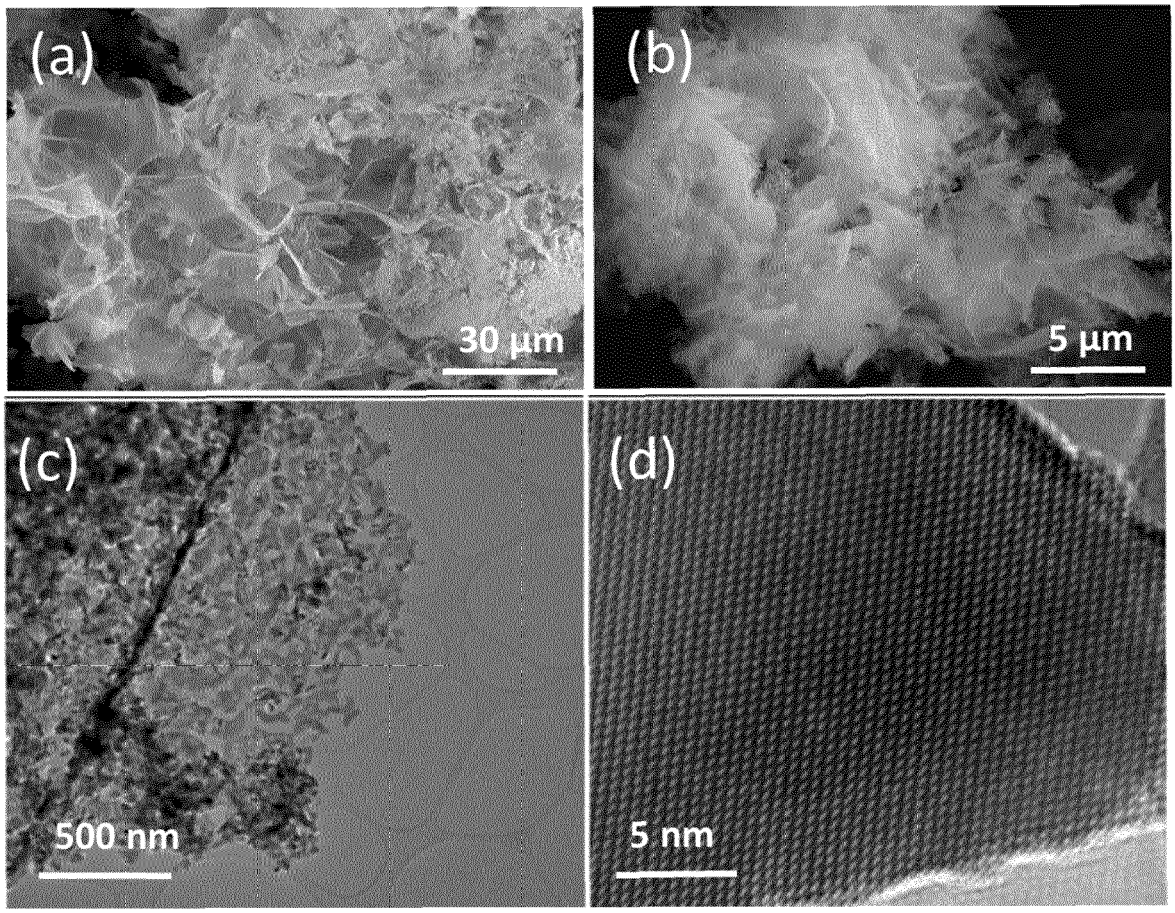


Figure 5

*

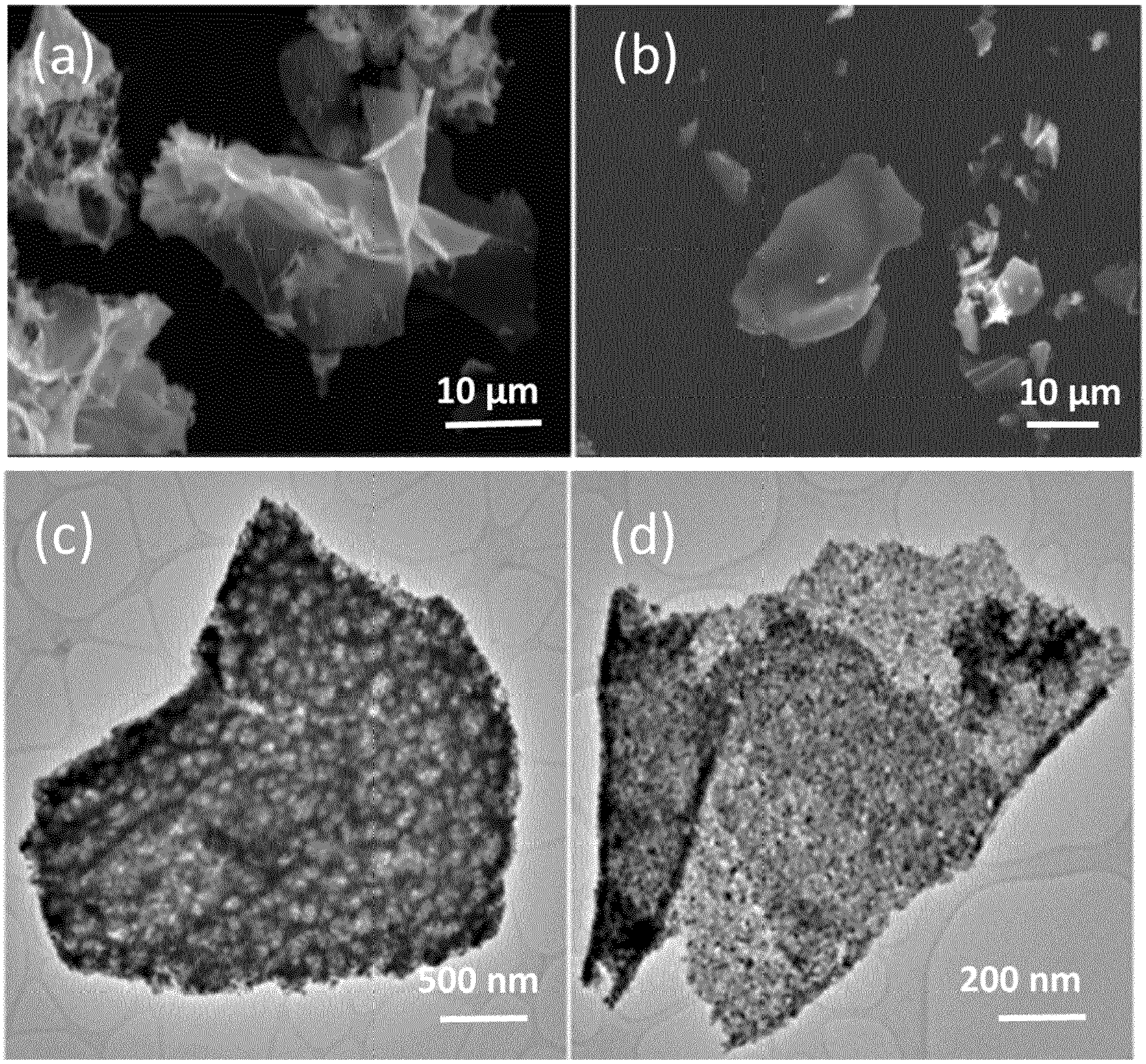


Figure 6

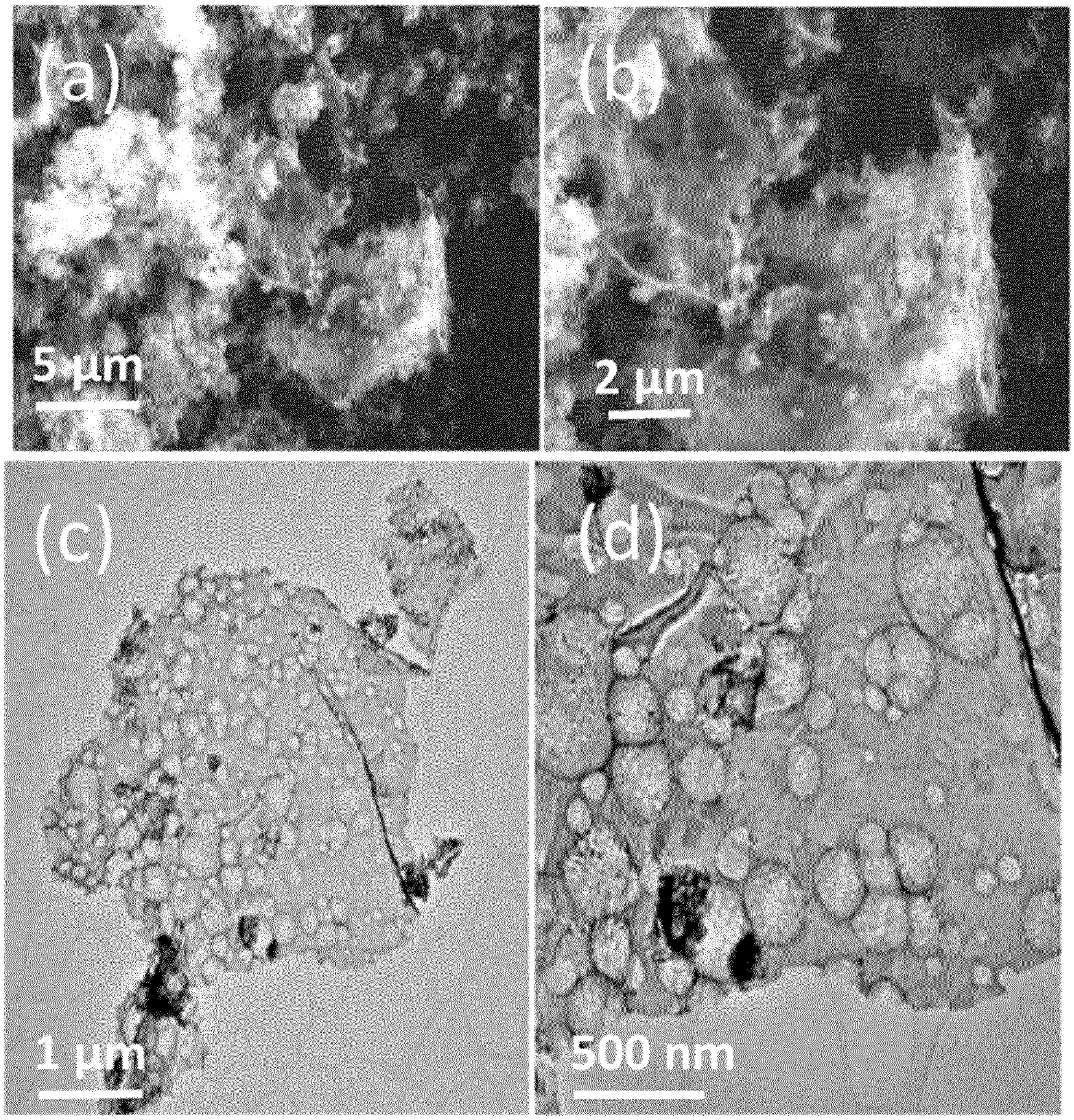


Figure 7

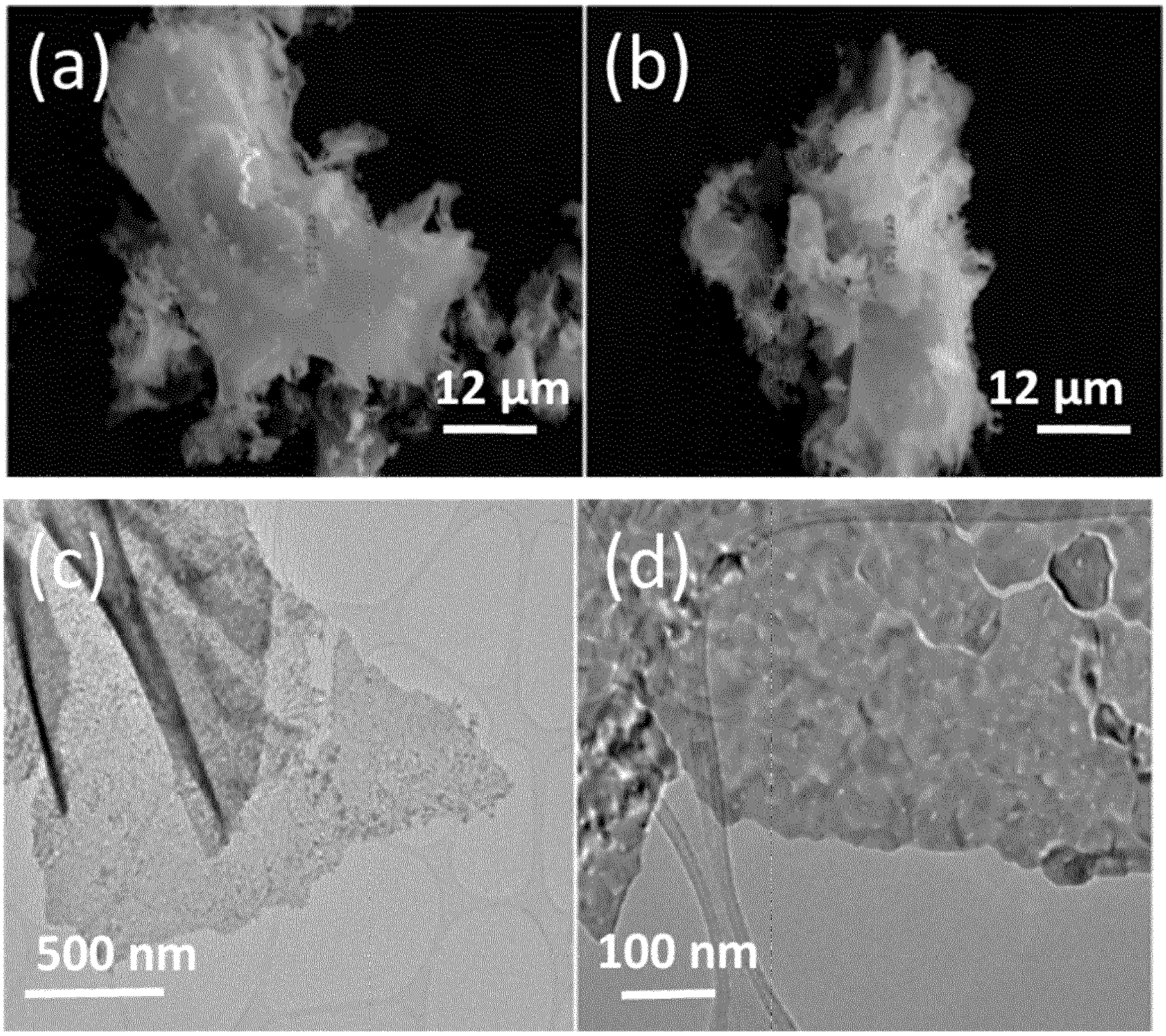


Figure 8

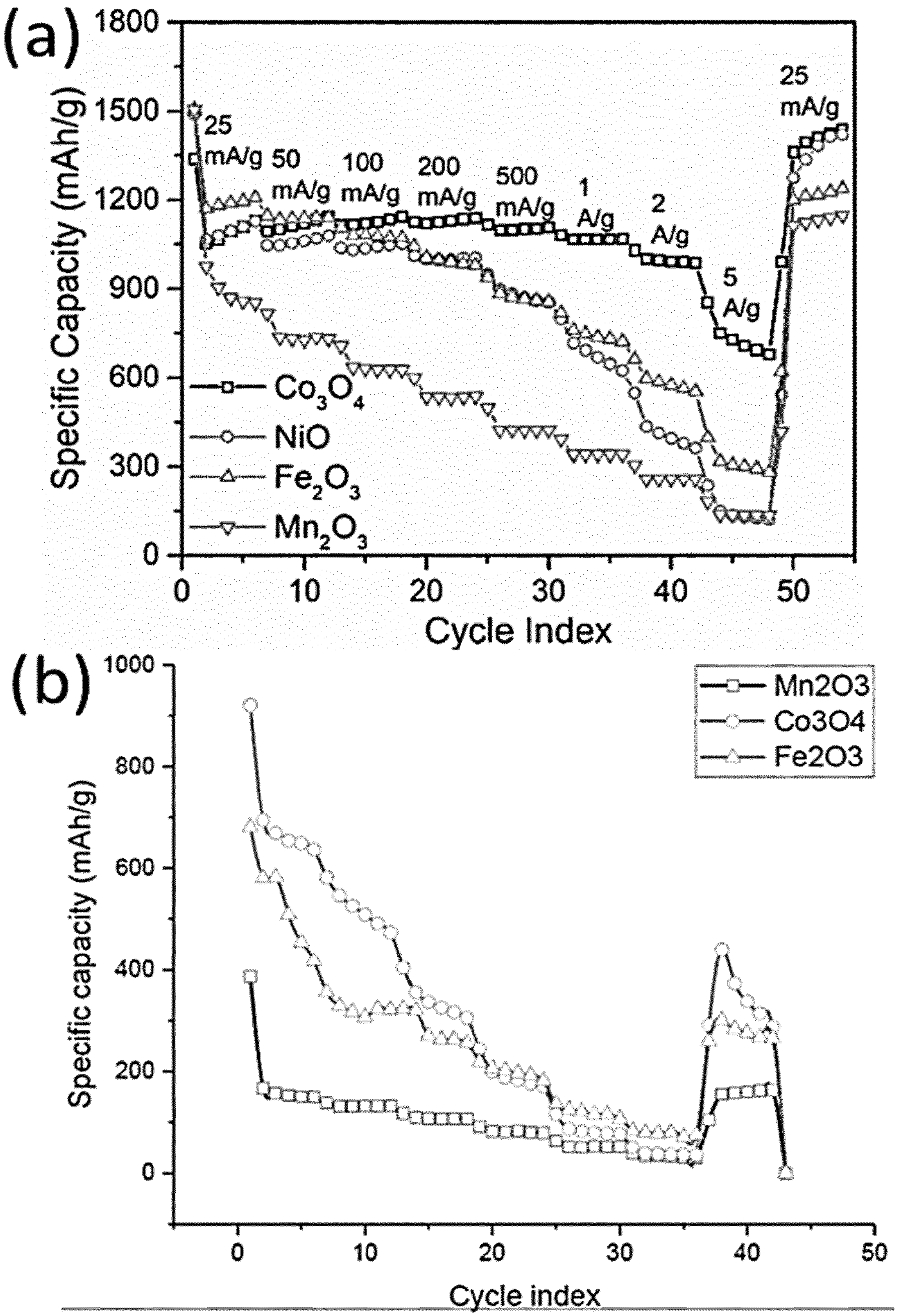
(a)
Specific Capacity (mAh/g)
Cycle Index
25 mA/g
50 mA/g
100 mA/g
200 mA/g
500 mA/g
1 A/g
2 A/g
5 A/g
25 mA/g
Co3O4
NiO
Fe2O3
Mn2O3
(b)
Specific capacity (mAh/g)
Cycle index
Mn2O3
Co3O4
Fe2O3

Figure 9

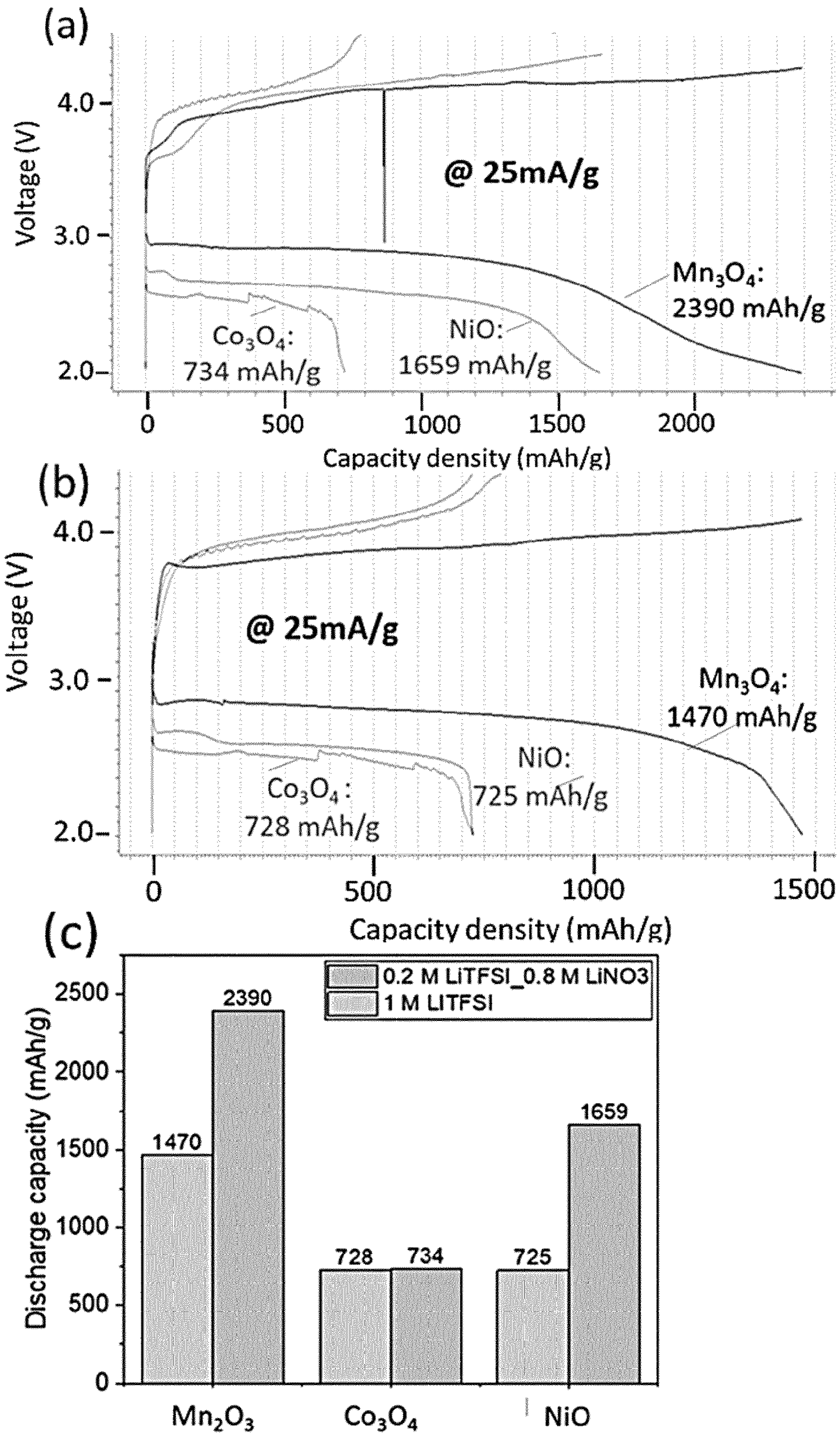
(a)
Voltage (V)
4.0
3.0
2.0
@ 25mA/g
Mn3O4:
2390 mAh/g
Co3O4:
734 mAh/g
NiO:
1659 mAh/g
0
500
1000
1500
2000
Capacity density (mAh/g)
(b)
Voltage (V)
4.0
3.0
2.0
@ 25mA/g
Mn3O4:
1470 mAh/g
NiO:
725 mAh/g
Co3O4:
728 mAh/g
0
500
1000
1500
Capacity density (mAh/g)
(c)
Discharge capacity (mAh/g)
0.2 M LiTFSI_0.8 M LiNO3
1 M LiTFSI
2500
2000
1500
1000
500
0
2390
1470
1659
728
734
725
Mn2O3
Co3O4
NiO

Figure 10

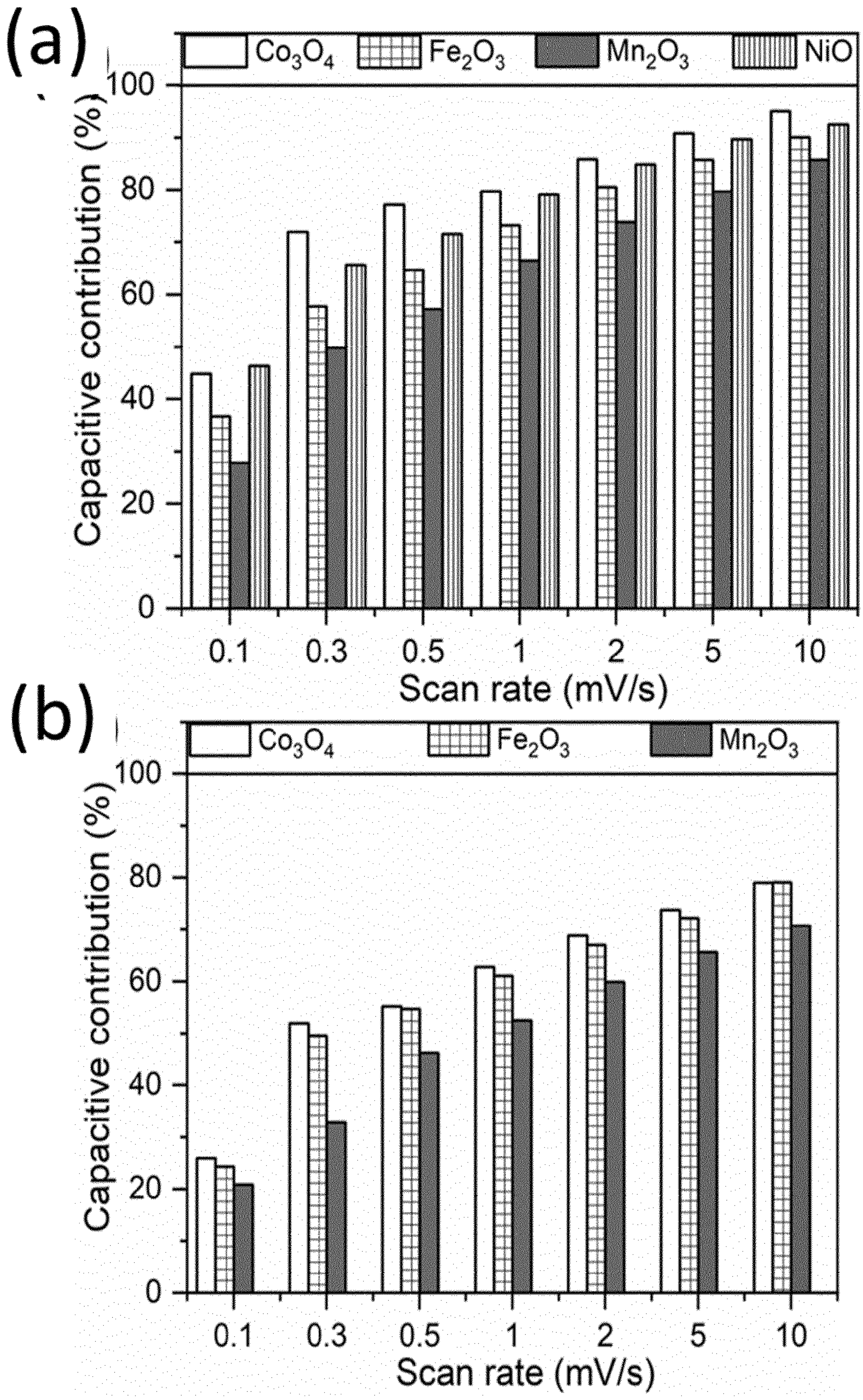
(a)
Co3O4
Fe2O3
Mn2O3
NiO
Capacitive contribution (%)
0
20
40
60
80
100
0.1
0.3
0.5
1
2
5
10
Scan rate (mV/s)
(b)
Co3O4
Fe2O3
Mn2O3
Capacitive contribution (%)
0
20
40
60
80
100
0.1
0.3
0.5
1
2
5
10
Scan rate (mV/s)

Figure 11

Europäisches Patentamt
European Patent Office
Office européen des brevets

# EUROPEAN SEARCH REPORT

Application Number
EP 20 38 3049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | KR 2019 0097752 A (KOREA ADVANCED INST SCI & TECH [KR]) 21 August 2019 (2019-08-21)<br>* paragraphs [0018], [0048]; claims * | 7-9<br>1-6, 10-15 | INV.<br>C01G45/02<br>C01G49/06<br>C01G51/04<br>C01G53/04<br>H01M4/48<br>H01M4/505<br>H01M4/52<br>H01M4/90<br>H01M10/052<br>H01M10/054<br>H01M12/08 |
| X<br>A | US 2013/115453 A1 (FAN HONGJIN [SG] ET AL) 9 May 2013 (2013-05-09)<br>* paragraphs [0069], [0070], [0253]; claims * | 7-9<br>1-6, 10-15 | |
| X<br>A | CN 107 376 921 B (SUZHOU RES INSTITUTE SHANGHAI INSTITUTE OF CERAMICS CHINESE ACADEMY OF) 21 January 2020 (2020-01-21)<br>* claims; examples 1,2 * | 7,8,10<br>1-6,9, 11-15 | |
| X<br>A | WANG XIUHUA ET AL: "Facile synthesis ultrathin mesoporous Co3O4nanosheets for high-energy asymmetric supercapacitor", JOURNAL OF ALLOYS AND COMPOUNDS, ELSEVIER SEQUOIA, LAUSANNE, CH, vol. 686, 17 June 2016 (2016-06-17), pages 969-975, XP029701913, ISSN: 0925-8388, DOI: 10.1016/J.JALLCOM.2016.06.156<br>* sections 2.2, 3.2, 3.3 * | 7-9<br>1-6, 10-15 | TECHNICAL FIELDS SEARCHED (IPC)<br>C01G<br>H01M |
| X<br>A | WO 2018/084803 A1 (AGENCY SCIENCE TECH & RES [SG]) 11 May 2018 (2018-05-11)<br>* page 20, paragraphs 2,3; claims *<br>* page 17, paragraph 2 *<br>* claims * | 7,8<br>1-6,9-15 | |
| X<br>A | WO 2016/138385 A1 (UNIV TEXAS [US]) 1 September 2016 (2016-09-01)<br>* claims * | 7-9<br>1-6, 10-15 | |

The present search report has been drawn up for all claims

1

| Place of search | Date of completion of the search | Examiner |
|---|---|---|
| Munich | 28 May 2021 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 20 38 3049

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2021

| Patent document cited in search report | Publication date | Patent family member(s) | Publication date |
|---|---|---|---|
| KR 20190097752 A | 21-08-2019 | NONE | |
| US 2013115453 A1 | 09-05-2013 | NONE | |
| CN 107376921 B | 21-01-2020 | NONE | |
| WO 2018084803 A1 | 11-05-2018 | US 2019273255 A1 | 05-09-2019 |
| | | WO 2018084803 A1 | 11-05-2018 |
| WO 2016138385 A1 | 01-09-2016 | US 2016254528 A1 | 01-09-2016 |
| | | WO 2016138385 A1 | 01-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 108355632
- CN 108435157 A